(19) Europäisches Patentamt
European Patent Office
Office européen des brevets

(11) **EP 4 696 995 A1**

(12) **EUROPEAN PATENT APPLICATION**

(43) Date of publication:
**18.02.2026   Bulletin 2026/08**

(21) Application number: **24194847.0**

(22) Date of filing: **16.08.2024**

(51) International Patent Classification (IPC):
***G01G 19/08*** (2006.01)

(52) Cooperative Patent Classification (CPC):
**G01G 19/086**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **Wölfinger, Alexander**
  **442 65 Marstrand (SE)**
• **Ni, Lei**
  **417 67 Göteborg (SE)**
• **Hansson, Johan**
  **436 38 Askim (SE)**
• **Ediz, Said**
  **421 41 Göteborg (SE)**

(74) Representative: **Valea AB**
**Box 1098**
**405 23 Göteborg (SE)**

(54) **ESTIMATING MASS OF A TOWED UNIT**

(57)   A computer system (600) comprising processing circuitry (602) configured to estimate a mass (Mx) of a towed unit (2) of a vehicle (1) is provided. When the vehicle (1) is standing still on a road surface (10), the processing circuitry (602) is configured to estimate the mass (Mx) of the towed unit (2) based on a first propulsion force (F1) needed to be applied to wheels (Wt) of a towing unit (3) to move the towed unit (2) when the towed unit (2) is braking; and/or when the vehicle (1) is travelling up a slope (11), the processing circuitry (602) is configured to estimate the mass (Mx) of the towed unit (2) based on a second propulsion force (F2) needed to be applied to the wheels (Wt) of the towing unit (3) to maintain a velocity (v) of the vehicle (1).

Fig. 1

## Description

### TECHNICAL FIELD

The disclosure relates generally relates to estimating mass of a towed unit. The disclosure can be applied to heavy-duty vehicles, such as trucks, buses, and construction equipment, among other vehicle types as long as there is a towed unit attached to or part of the vehicle. Although the disclosure may be described with respect to a particular vehicle, the disclosure is not restricted to any particular vehicle.

### BACKGROUND

To efficiently control a vehicle such as controlling its motion, fuel consumption, suspension, stability, or any other suitable aspect, it may be necessary to utilize knowledge of the vehicle characteristics such as size, dimension and mass. Typically, mass of a vehicle is initially set, or may be measured by sensors in a vehicle such as by measuring load on each axle. However, such sensors are typically only available on active vehicle units such as tractors or trucks and not on towed units.

Hence there is a need to provide an increased accuracy in estimation of mass for towed units.

### SUMMARY

According to a first aspect of the disclosure, a computer system comprising processing circuitry configured to estimate a mass of a towed unit of a vehicle is provided. The vehicle comprises the towed unit and a towing unit arranged to directly or indirectly tow the towed unit. Preferably the towing unit is directly attached to the towed unit, such as by a fifth wheel.

The processing circuitry is configured to, when the vehicle is standing still on a road surface, estimate the mass of the towed unit based on a first propulsion force needed to be applied to at least one wheel of wheels of the towing unit to move the towed unit when the towed unit is applying a brake force to at least one wheel of wheels of the towed unit. The brake force may preferably be applied to all wheels of the towed unit, but examples herein may be applicable to apply the brake force to any suitable subset of wheels of the towed unit.

As an alternative or in addition to the above estimation, the processing circuitry is configured to, when the vehicle is travelling up a slope, estimate the mass of the towed unit based on a second propulsion force needed to be applied to at least one of the wheels of the towing unit to maintain a velocity of the vehicle. Maintaining a velocity in examples herein may mean that the vehicle travels a constant velocity, within a set error margin e.g., max 1% change in velocity, for a set period of time such as 1 second.

The first aspect of the disclosure may seek to provide a more accurate estimation of mass for the towed unit.

A technical benefit may include enabling improved control of the vehicle when considering the mass for the towed unit, such as improved control of vehicle motion and dynamics in particular with respect to the trailer, fuel consumption, and stability control.

Furthermore, it is possible to estimate the mass of the towed unit without having sensors installed on axles of the towed unit for measuring the load.

Optionally in some examples, including in at least one preferred example, when the vehicle is standing still on the road surface the processing circuitry is configured to estimate the mass of the towed unit by being configured to:

- trigger a maximum brake force to at least one of the wheels of the towed unit such that the wheels of the towed unit are not capable of rotating over the road surface, preferably triggering the maximum brake force to all of the wheels of the towed unit,

- trigger a propulsion force to be applied to at least one of the wheels of the towing unit, preferably triggering the propulsion force to all wheels of a driving axle of the towing unit,

- measure the first propulsion force needed to be applied to at least one of the wheels of the towing unit to move the towed unit by sliding the towed unit over the road surface.

In these examples, the triggered propulsion force may be increased over a time period such that the first propulsion force can be measured as the towing unit starts to move.

A technical benefit may include a more accurate estimation of the mass of the towed unit. This is since the mass may be estimated using the propulsions force which starts sliding the towed unit over the road surface.

Optionally in some examples, including in at least one preferred example, the processing circuitry is configured to measure the first propulsion force needed to be applied to at least one of the wheels of the towing unit to move the towed unit by being configured to obtain sensor data of one or more sensors of the vehicle. In these examples, the sensor data is indicative of a longitudinal motion of the vehicle. In these examples, the processing circuitry is configured to measure the first propulsion force in response to detecting that the sensor data is indicative of that the vehicle is moving longitudinally.

A technical benefit may include a more accurate estimate of the mass of the towed unit. This is since it may be possible to more accurately estimate the mass of the towed unit based on a more accurate first propulsion force when the vehicle is detected to move longitudinally.

Optionally in some examples, including in at least one preferred example, the road surface is associated with a predefined friction and wherein when the vehicle is standing still on the road surface, the processing circuitry is configured to estimate the mass of the towed unit based on the predefined friction.

A technical benefit may include a more accurate estimate of the mass of the towed unit. This is since the friction does not need to be estimated which would cause inaccuracies.

Optionally in some examples, including in at least one preferred example, when the vehicle is standing still on the road surface, the processing circuitry is configured to estimate the mass of the towed unit by calculating $\frac{F1}{\mu * g} - mt$. In these examples, F1 is the first propulsion force needed to be applied to at least one of the wheels of the towing unit to move the towing unit, $\mu$ is a predefined friction of the road surface the vehicle is standing on, and g is the gravitational force. In these examples, *mt* is a mass of the towing unit and/or a mass applied to axles of the towing unit.

A technical benefit may include a more accurate estimate of the mass of the towed unit. This is since the above calculation may provide an accurate estimation of the mass of the towed unit accounting for mass of the towing unit and/or mass applied to all or at least one of the axles of the towing unit. These loads may be measured by sensors attached to the towing unit, but which sensor types may not be present at the towed unit.

Optionally in some examples, including in at least one preferred example, when the vehicle is standing still on the road surface and when the towed unit is applying a vertical load on the towing unit, the processing circuitry is configured to estimate the mass of the towed unit by accounting for the vertical load applied on the towing unit.

Directions as used in examples herein, e.g. horizontal, vertical, lateral, may relate to when the vehicle is standing on flat ground, or alternatively may be relative to the surface of where the vehicle is travelling.

A technical benefit may include a more accurate estimate of the mass of the towed unit. This is since the vertical load applied on the towing unit may at least partly be from supporting the towed unit, e.g., when connected with the towed unit by a fifth wheel. In these examples, such load needs to be accounted for to attain accurate estimates of the mass of the towed unit.

Optionally in some examples, including in at least one preferred example, when the vehicle is travelling up the slope, the processing circuitry is configured to estimate the mass of the towed unit by being configured to:

- trigger a propulsion force to be applied to at least one of the wheels of the towing unit, preferably all wheels of a driving axle of the towing unit, and
- measure the second propulsion force needed to be applied to the at least one of the wheels of the towing unit to maintain a velocity of the vehicle over a period of time.

In these examples, the propulsion force may be triggered to be increasing or otherwise adjusted over time until the velocity is maintained over the period of time.

Maintaining the velocity may in examples herein mean that the vehicle travels at a constant velocity, within a set error margin e.g., max 1% change in velocity, for a set period of time such as 1 second.

In these examples, the wheels of the towed unit may be free-rolling, e.g., such that the towed unit would be subject to a force to roll down the slope.

A technical benefit may include a more accurate estimate of the mass of the towed unit. This is since the second propulsion force is measured when a steady state is maintained and therefore the mass of the towed unit can be accurately estimated based on how mass is propelled up a slope using the second propulsion force.

Optionally in some examples, including in at least one preferred example, when the vehicle is travelling up the slope, the processing circuitry is configured to estimate the mass of the towed unit by being configured to obtain an angle of the slope and to estimate the mass of the towed unit further based on the angle of the slope.

A technical benefit may include a more accurate estimate of the mass of the towed unit since the angle of the slope is considered.

Optionally in some examples, including in at least one preferred example, the processing circuitry is configured to obtain the angle of the slope by being configured to obtain sensor data of one or more sensors of the vehicle indicative of an angle of the slope, and to estimate the angle of the slope based on the sensor data.

A technical benefit may include a more accurate estimate of the mass of the towed unit. This is since the angle of the slope can be accurately measured.

Optionally in some examples, including in at least one preferred example, e.g., as an alternative to measuring the angle of the slope, the processing circuitry is configured to obtain the angle of the slope by being configured to obtain a predefined angle of the slope.

A technical benefit may include a more accurate estimate of the mass of the towed unit. This is since the angle can be accurately obtained by being predefined, e.g., such as obtained part of map data. The angle may therefore be measured using accurate measurement tools in advance to the vehicle travelling the slope.

Optionally in some examples, including in at least one preferred example, when the vehicle is travelling up the slope, the processing circuitry is configured to estimate the mass of the towed unit by calculating F2 * g * $\sin(\alpha)$ - *mt*. In these examples, F2 is the second propulsion force needed to maintain the velocity of the vehicle over the set period of time, $\alpha$ is an angle of the slope, and where g is the gravitational force. In these examples, *mt* is a mass of the towing unit and/or a mass applied to axles of the towing unit.

A technical benefit may include a more accurate estimate of the mass of the towed unit. This is since the mass may be accurately estimated using the above calculation which accounts for the mass of the towing unit and/or mass applied to the axles of the towing unit

Optionally in some examples, including in at least one preferred example, when the vehicle is travelling up the slope, the processing circuitry is configured to estimate the mass of the towed unit by accounting for any one or more out of:

- rolling resistance of the vehicle,
- wind conditions, e.g., air drag and/or wind resistance.

A technical benefit may include a more accurate estimate of the mass of the towed unit. This is since secondary parameters such as rolling resistance and wind conditions may further be accounted for to improve accuracy of the estimation.

According to a second aspect of the disclosure, a vehicle comprising a towing unit and a towed unit is provided. The towing unit is arranged to directly or indirectly tow the towed unit. The vehicle comprises and/or is controlled by the computer system according to the first aspect.

According to a third aspect of the disclosure, a computer-implemented method for estimating a mass of a towed unit of a vehicle is provided. The vehicle comprises the towed unit and a towing unit arranged to directly or indirectly tow the towed unit.

The method comprises estimating the mass of the towed unit by:

- by processing circuitry of a computer system, when the vehicle is standing still on a road surface, estimating the mass of the towed unit based on a first propulsion force needed to be applied to at least one of the wheels of the towing unit to move the towed unit when the towed unit is applying a brake force to at least one wheel of wheels of the towed unit, and/or
- by the processing circuitry, when the vehicle is travelling up the slope, estimating the mass of the towed unit based on a second propulsion force needed to be applied to at least one of the wheels of the towing unit to maintain a velocity of the vehicle.

Optionally in some examples, including in at least one preferred example, when the vehicle is standing still on the road surface the method comprises estimating the mass of the towed unit by comprising:

- triggering a maximum brake force to at least one of the wheels of the towed unit such that the wheels of the towed unit is not capable of rotating over the road surface,
- triggering a propulsion force to be applied to at least one of the wheels of the towing unit, and
- measuring the first propulsion force needed to be applied to at least one of the wheels of the towing unit to move the towed unit by sliding the towed unit over the road surface.

Optionally in some examples, including in at least one preferred example, when the vehicle is standing still on the road surface the method comprises estimating the mass of the towed unit by calculating : $\frac{F1}{\mu * g} - mt$ . In these examples, F1 is the first propulsion force needed to be applied to at least one of the wheels of the towing unit to move the towing unit, $\mu$ is a predefined friction of the road surface the vehicle is standing on, and g is the gravitational force. In these examples, *mt* is a mass of the towing unit and/or a mass applied to axles of the towing unit.

Optionally in some examples, including in at least one preferred example, when the vehicle is travelling up the slope, the method comprises estimating the mass of the towed unit by comprising:

- triggering a propulsion force to be applied to at least one of the wheels of the towing unit,
- measuring the second propulsion force needed to be applied to at least one of the wheels of the towing unit to maintain a velocity of the vehicle over a period of time.

Optionally in some examples, including in at least one preferred example, when the vehicle is travelling up the slope, the method comprises estimating the mass of the towed unit by calculating : F2 * g * sin($\alpha$) - *mt*. In these examples, F2 is the second propulsion force needed to maintain the velocity of the vehicle over the set period of time, $\alpha$ is an angle of the slope, and g is the gravitational force. In these examples, *mt* is a mass of the towing unit and/or a mass applied to axles of the towing unit.

The technical benefits of the second and third aspects may correspond to the technical benefits of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIGS. 1-2** illustrates an exemplary vehicle according to respective examples.

**FIG. 3** is a flow chart of an exemplary method according to an example.

**FIG. 4** is another view of **FIGS. 1-2,** according to an example.

**FIG. 5** is a flow chart of an exemplary method according to an example.

**FIG. 6** is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

Examples herein may relate to estimating mass of a towed unit, preferably a trailer. Using said mass, it may be possible to control a vehicle comprising the towed unit in a more efficient and/or safe manner, e.g., as the mass of the towed unit may be needed for different situations of controlling and/or monitoring the vehicle such as for controlling vehicle motion or vehicle stability.

While mass of towing units such as tractors may typically be measured by sensors on these vehicle units, such sensors are not available on towed units or are typically too expensive to install on towed units such as trailers.

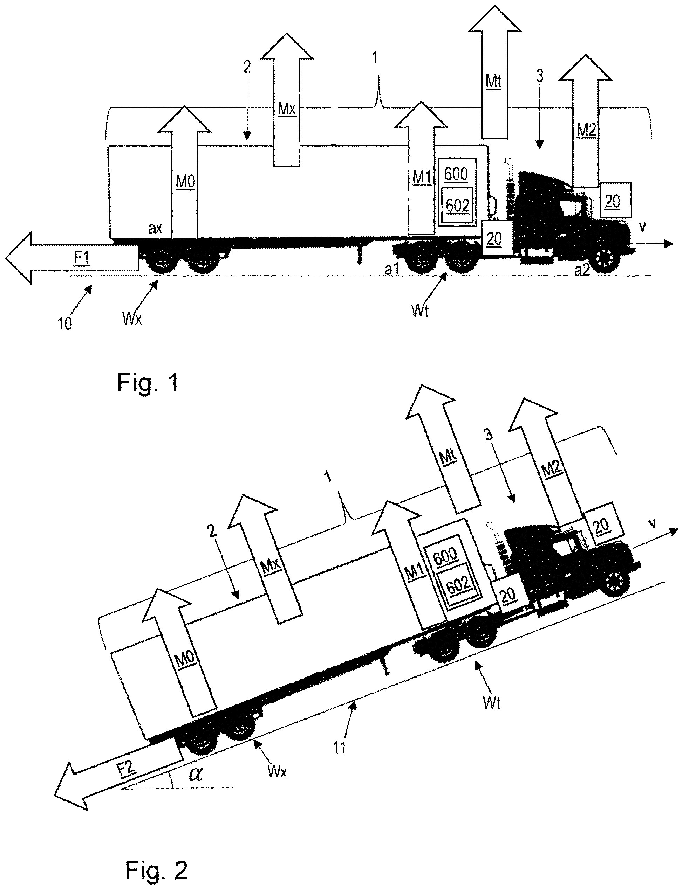

FIG. 1 illustrates an exemplary **vehicle 1** standing still on **a road surface 10.** The vehicle 1 may be a combination vehicle, i.e., comprising multiple vehicle units. The vehicle 1 comprises a towing unit 3 and a towed unit 2. While only one towed unit is discussed in examples herein, the vehicle 1 may further comprise any suitable number of towed units.

The towing unit 3 may preferably be a truck or a tractor.

The towed unit 2 may preferably be a trailer.

The towing unit 3 is arranged to directly or indirectly tow the towed unit 2. For example, the towed unit 2 may be connected to the towing unit 3 by a fifth wheel, and thereby applying some of its mass on axles of the towing unit 3. In some other examples, a towing bar may be used to connect the towed unit 2 and the towing unit 3. In some other examples, a dolly may be used to connect the towed unit 2 and the towing unit 3.

The towed unit 2 may comprise **one or more axles ax.** In the example of FIG 1, the one or more axles ax may be seen as rear axles of a trailer and wherein a front-part of the towed unit 2 is connected to axles of the towing unit 3 thereby the towing unit 3 is sharing part of the load applied by the towed unit 2.

The vehicle 1 comprises wheels Wx of the towed unit 2, and may comprise wheels Wt of the towing unit 3.

The mass to be estimated in examples herein may be a **mass Mx** of the towed unit 2, The mass Mx of the towed unit 2 of examples herein may be a dynamic mass that depends on how much mass Mx of the towed unit 2 is applied to the one or more axles ax, referred to as **mass M0,** and how much of mass is applied to axles of the towing unit 3, part of **mass M1**, which will be further discussed.

In examples herein, the towing unit 3 may be represented by towing unit **mass Mt,** also represented as *mt* in some equations and calculations of examples herein. The mass Mt may comprise a number of mass components such as the **mass M1** applied to one or more **rear axles a1** of the towing unit 3. The mass M1, as discussed above may further comprise part of load applied from the towed unit 2 to the one or more rear axles a1 of the towing unit 3 and may comprise mass of the towing unit 3 applied to the one or more rear axles a1. The mass Mt may further comprise a **mass M2** applied to one or more **front axles a2** of the towing unit 3.

The road surface 10 may have a predefined friction which may be obtained or measured as part of examples herein. Examples herein may comprise estimating the mass Mx of the towed unit 2 based on a **first propulsion force F1** needed to be applied to at least one of the wheels Wt of the towing unit 3 to move the towed unit 2 when the towed unit 2 is applying a brake force to at least one of the wheels Wx of the towed unit 2. Moving the towed unit 2 means moving in a longitudinal direction.

In any or all examples herein, when discussing wheels or at least one of the wheels Wx, or at least one of the wheels Wt, respectively all applicable wheels of the respective wheels Wx or Wt may be meant. If possible or suitable, a respective subset of wheels may be utilized. In certain situations, only one wheel may be necessary to be used for braking and/or propulsion, but in preferred examples, all wheels that can be used for braking or propulsion of respective units may be used in such manner.

To detect movement of the vehicle 1, one or more sensors 20 in the vehicle 1 may be used, e.g., a speedometer.

In other words, the wheels Wx may be locked and the first propulsion force F1 may be the force needed to start gliding or dragging the wheels Wx over the road surface 10.

Estimating the mass Mx of the towed unit 2 may comprise calculating the mass $M0 = \frac{F1}{\mu * g} - mt$ ; where F1 is the first propulsion force F1 needed to be applied to at least one of the wheels Wt of the towing unit 3 to move the towing unit 3, $\mu$ is a predefined friction of the road surface 10 the vehicle 1 is standing on, and g is the gravitational force, and *mt* is the mass of the towing unit 3 and/or the mass m1, m2 applied to axles a1, a2 of the towing unit 3.

To further calculate the mass Mx of the towed unit 2, the mass applied to the one or more rear axles a1 of the towing unit 3 may need to be accounted for. For example, the mass Mx of the towed unit 2 may be the

mass $M0 = \frac{F1}{\mu * g} - mt$ , and the mass M1 as measured from sensors of the towing unit 3, subtracted by the corresponding load measured on the one or more axles a1 when the towed unit 2 was not connected to the towing unit 3.

**FIG. 2** illustrates the vehicle 1 in a situation where the vehicle 1 is arranged in **a slope 11.** The slope 11 may be the road surface 10 but as an uphill slope. In these examples the wheels Wx are preferably completely free rolling such that it can be measured how much force is needed to be applied to tow the towed unit 2 up the slope 11. This is measured at a steady state when the vehicle has a velocity v, e.g., in a longitudinal direction.

Examples herein may comprise estimating the mass Mx of the towed unit 2 based on a **second propulsion force F2** needed to be applied to at least one of the wheels Wt of the towing unit 3 to maintain a **velocity v** of the vehicle 1, the velocity v or any velocity of examples herein may be a constant velocity or a velocity within as set error margin of a constant velocity.

The slope 11 may have an angle $\alpha$ which angle may be measured by the one or more sensors 20 of the vehicle 1, e.g., using a camera and/or accelerometer, or may be predefined.

The mass Mx may be calculated by the mass M0 = F2 * g * sin($\alpha$) - mt, where F2 is the second propulsion force F2 needed to maintain the velocity of the vehicle 1 over the set period of time, $\alpha$ is the angle of the slope 11, and g is the gravitational force, and where *mt* is the mass of the towing unit 3 and/or a mass applied to axles of the towing unit 3. To further calculate the mass Mx of the towed unit 2, the mass applied to the one or more rear axles a1 of the towing unit 3 may need to be accounted for which may be measured by sensors already provisioned on the towing unit 3, e.g., as part of the one or more sensors 20.

Examples herein may be performed by a computer system 600 and/or a processing circuitry 602 therein, e.g., as illustrated both in FIG 1 and FIG 2.

The computer system 600 and/or the processing circuitry 602 therein may be comprised in the vehicle 1, e.g., being an Electronic Control Unit (ECU) of the vehicle 1, or may be remote to the vehicle 1, e.g., comprised in a server or a cloud service.

The computer system 600 and/or the processing circuitry 602 therein may be communicatively coupled with any suitable entity of the vehicle 1 and/or may control any suitable aspect or entity of the vehicle 1.

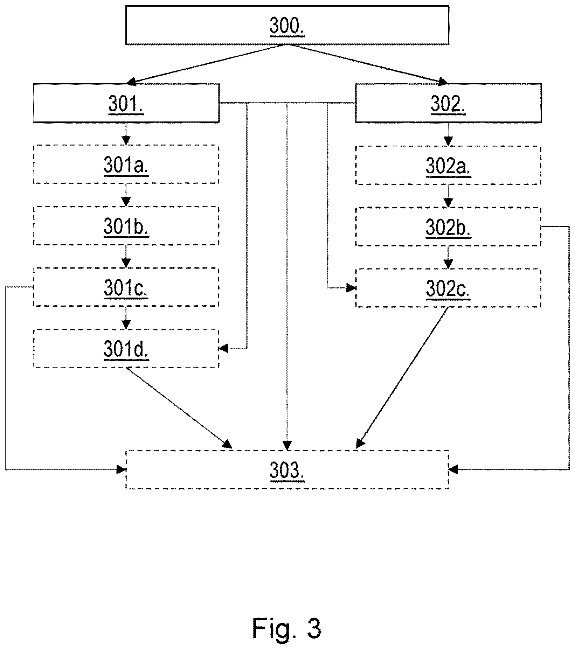

**FIG. 3** is a flow chart of an exemplary computer-implemented **method 300** for estimating the mass Mx of the towed unit 2 of the vehicle 1. The vehicle 1 comprises the towed unit 2 and the towing unit 3. The towing unit 3 is arranged to directly or indirectly tow the towed unit 2. Directly towing may mean that the towing unit 3 is directly coupled with the towed unit 2, e.g., by a fifth wheel or towbar, while indirectly towing may mean that there may be any suitable vehicle unit in-between, such as a dolly.

The method 300 comprises for estimating the method comprising estimating the mass Mx of the towed unit 2 by actions 301 and/or 302, i.e., action 301 for when the vehicle 1 is standing still on the road surface 10 and/or action 302 for when the vehicle 1 is travelling up the road surface 11. The method may further comprise detecting whether or not the vehicle is standing still on the road surface 10 and/or when the vehicle 1 is travelling up the road surface 11, e.g., by use of the one or more sensors 20, and on a basis thereof, determining whether or not to use action 301 or 302.

The method 300 may be performed by the computer system 600 and/or the processing circuitry 602 therein.

The method 300 may comprise the following actions, e.g., action 301 and/or action 302, and respective optional actions 301a-d as part of action 301 and/or actions 302a-c as part of action 302.

## Action 301

The method may comprise, when the vehicle 1 is standing still on the road surface 10, estimating the mass Mx of the towed unit 2 based on the first propulsion force F1 needed to be applied to at least one of the wheels Wt of the towing unit 3 to move the towed unit 2 when the towed unit 2 is applying a brake force to at least one of the wheels Wx of the towed unit 2.

The at least one of the wheels Wt of the towing unit 3 may comprise any one or more of the wheels of the towing unit 3 which may be applied with a propulsion force, e.g., all wheels of a driving axle.

The at least one of the wheels Wx may comprise any one or more of the wheels of the towed unit 2, e.g., all wheels which may be applicable to be applied with a brake force.

The first propulsion force F1 may be obtained by testing different propulsion forces applied to at least one of the wheels Wt of the towing unit 3 and in response, detect whether or not the vehicle 1 is moving. Preferably the propulsion force is increased over time such that the smallest propulsion force is found and detected to be the first propulsion force F1.

Applying the brake force may comprise locking at least one of the wheels Wx of the towed unit 2, e.g., using service or parking brakes.

To move the towed unit 2 may comprise sliding or dragging the towed unit 2 in a longitudinal direction over the road surface 10 e.g., while at least one of the wheels Wx is arranged to be locked such as by being braked with the service brakes and/or the parking brakes, e.g., at a maximum brake force of the towed unit 2.

In some examples, estimating the mass Mx of the towed unit 2 comprises the following actions 301a-c.

Action 301a

Estimating the mass Mx of the towed unit 2 may comprise triggering a maximum brake force to at least one of the wheels Wx of the towed unit 2 such that the wheels Wx of the towed unit 2 is not capable of rotating over the road surface 10. I.e., the wheels Wx may be braked by using a brake force above a threshold, typically at max, using service brakes and/or parking brakes such that the wheels Wx cannot rotate.

Action 301b

Estimating the mass Mx of the towed unit 2 may comprise triggering a propulsion force to be applied to at least one of the wheels Wt of the towing unit 3. The propulsion force may increase over time such that it may be detectable when the vehicle 1 starts to move longitudinally, i.e., when a steady state is reached or breached.

Action 301c

Estimating the mass Mx of the towed unit 2 may comprise measuring the first propulsion force F1 needed to be applied to at least one of the wheels Wt of the towing unit 3 to move the towed unit 2 by sliding the towed unit 2 over the road surface 10. The measuring of action 301c may be performed in response to that the triggered propulsion force of action 301b manages to move the vehicle 1 longitudinally, e.g., by increasing the propulsion force over time until the vehicle 1 moves.

In some examples, measuring the first propulsion force F1 needed to be applied to at least one of the wheels Wt of the towing unit 3 to move the towed unit 2 by obtaining sensor data of the one or more sensors 20 of the vehicle 1. The sensor data may be indicative of a longitudinal motion of the vehicle 1. In these examples, measuring the first propulsion force F1 is performed in response to detecting that the sensor data is indicative of that the vehicle 1 is moving longitudinally, e.g., by more than an error margin.

Action 301d

As an alternative or as part of the Actions 301a-c above, the method may comprise estimating the mass Mx of the towed unit 2 by calculating:

$$M0 = \frac{F1}{\mu * g} - mt$$

In these examples, F1 is the first propulsion force F1 needed to be applied to at least one of the wheels Wt of the towing unit 3 to move the towing unit 3, $\mu$ is a predefined friction of the road surface 10 the vehicle 1 is standing on, and where g is the gravitational force, and where *mt* is a mass of the towing unit 3 and/or a mass applied to axles of the towing unit 3.

The mass M0 may be the mass applied to the one or more axles ax of the towed unit 2. The other masses of mt, e.g., M1 and M2 may each be measured by sensors of the towing unit, before and after attaching the towed unit 2, and can therefore further be accounted for to estimate the mass Mx of the towed unit 2.

The mass mt of the towing unit 3 may be obtained by being predefined and/or by the one or more sensors measuring the mass applied to the axles a1, a2 of the towing unit 3. These sensors may exist on the towing unit 3 as they may be common on active units such as the towing unit 3 but are not available on passive units such as the towed unit 2.

In some of these examples, the road surface 10 is associated with a predefined friction and estimating the mass Mx of the towed unit 2 is based on the predefined friction. As an alternative example, the friction of the road surface 10 may be measured, e.g., by using the one or more sensors 20.

In some examples the towed unit 2 is applying a vertical load on the towing unit 3. In these examples, estimating the mass Mx of the towed unit 2 comprises accounting for the vertical load applied on the towing unit 3. In other words, the mass M0 applied to the one or more axles ax of the towed unit 2 may be estimated as above, and the remaining part of the mass Mx of the towed unit 2 which is applied to the one or more rear axles a1 may be determined based on sensor data obtained using the one or more sensors 20 of a load applied to the one or more rear axles a1 before and after coupling the towed unit 2 with the towing unit 3. In other words, the mass Mx may be estimated by estimating the mass M0 and further accounting for measurements of the mass M1 applied to the one or more rear axles a1.

**Action 302**

As an alternative or in addition to Action 301, the method may comprise, when the vehicle 1 is travelling up the slope 11, estimating the mass Mx of the towed unit 2 based on the second propulsion force F2 needed to be applied to at least one of the wheels Wt of the towing unit 3 to maintain the velocity v of the vehicle 1. The velocity v may be predefined or may be any velocity, e.g., in a longitudinal direction, that can be maintained for a set time period.

The second propulsion force F2 may be obtained by testing different propulsion forces applied to at least one of the wheels Wt of the towing unit 3 and in response, detect whether or not the vehicle 1 is moving at the velocity v. Preferably the propulsion force is increased over time such that the smallest propulsion force is found and detected to be the second propulsion force F2.

Preferably, in these examples of action 302, the wheels Wx of the towed unit 2 may be free-rolling, e.g., such that the towed unit 2 is subject to a force to roll down the slope 11.

In some examples, estimating the mass Mx of the towed unit 2 comprises the following actions 302a-b.

Action 302a

The method may comprise estimating the mass Mx of the towed unit 2 by comprising triggering a propulsion force to be applied to at least one of the wheels Wt of the towing unit 3. The propulsion force may be adjusted, e.g., increased, over time such that it may be detectable when the vehicle 1 moves longitudinally at a velocity v over time.

Action 302b

The method may comprise estimating the mass Mx of the towed unit 2 by comprising measuring the second propulsion force F2 needed to be applied to at least one of the wheels Wt of the towing unit 3 to maintain the velocity v of the vehicle 1 over a period of time. As an example, a speedometer and clock of the one or more sensors may be used for measuring the second propulsion force F2.

Action 302c

As an alternative or addition to the Actions 302a-b above, the method may comprise estimating the mass Mx of the towed unit 2 by calculating:

$$M0 = F2 * g * \sin(\alpha) - mt;$$

In these examples, F2 is the second propulsion force F2 needed to maintain the velocity of the vehicle 1 over the set period of time, e.g., one second, $\alpha$ is an angle of the slope 11, g is the gravitational force, and *mt* is the mass of the towing unit 3 and/or the mass applied to axles a1, a2 of the towing unit 3.

The mass mt of the towing unit 3 may be obtained by being predefined and/or by the one or more sensors measuring the mass applied to the axles a1, a2 of the towing unit 3. These sensors may exist on the towing unit 3 as they may be common on active units but are not available on passive units such as the towed unit 2.

The mass M0 applied to the one or more axles ax of the towed unit 2 may be estimated as above, and the remaining part of the mass Mx of the towed unit 2 which is applied to the one or more rear axles a1 may be determined based on sensor data obtained using the one or more sensors 20 of a load applied to the one or more rear axles a1 before and after coupling the towed unit 2 with the towing unit 3.

The mass Mx may further be estimated by estimating the mass M0, e.g., as above and further accounting for measurements of the mass M1 applied to the one or more rear axles a1.

In some examples, estimating the mass Mx of the towed unit 2 comprises obtaining an angle of the slope 11 and to estimate the mass Mx of the towed unit 2 further based on the angle of the slope 11.

In some examples, obtaining the angle of the slope 11 comprises obtaining sensor data of one or more sensors 20 of the vehicle 1 indicative of an angle of the slope 11, and estimating the angle of the slope 11 based on the sensor data. As an alternative, obtaining the angle of the slope 11 may comprise obtaining a predefined angle of the slope 11. The angle may for example be obtained as part of map data.

In some examples for any one or both of actions 301-302 above, estimating the mass Mx of the towed unit 2 comprises accounting for any one or more out of:

- rolling resistance of the vehicle 1, e.g., how the towing unit 3 and/or the towed unit rolls in the slope 11 and/or over the road surface 10.
- wind conditions, e.g., air drag and/or wind resistance.

Accounting for the rolling resistance and/or the wind conditions when estimating the mass Mx of the towed unit may be based on a predefined model or heuristics.

**Action 303**

Optionally the method may further comprise controlling the vehicle 1 using the mass Mx of the towed unit 2. As one non-limiting example, the method may comprise controlling the vehicle motion using a predefined kinematics model and based on the mass Mx of the towed unit 2. As another non-limiting example, the method may comprise controlling the vehicle stability, e.g., performing stability mitigating operations and/or detecting instability of the vehicle, based on a predefined stability model and based on the mass Mx of the towed unit 2.

As further non-limiting examples, controlling the vehicle 1 using the mass Mx of the towed unit 2 may comprise performing any of the following based on the mass Mx:

- Stability control of the vehicle 1, e.g., jack-knife prevention, roll-over prevention, or brake distribution;
- Fuel consumption control, e.g., by automating efficient fuel consumption based on the mass Mx, e.g., as part of autonomous systems, assisting systems or by issuing driver prompts;
- Estimating driving range of the vehicle 1 such as with respect to electric motors and battery capacity, combustion engines and fuel levels, using fuel-cells, etc.
- Controlling an autonomous vehicle in a more robust manner by considering the mass Mx,
- Controlling traction of the vehicle by utilizing traction control systems based on the mass Mx, e.g., wherein a more accurate mass estimation of the mass Mx may provide a faster response to traction control limitation on low friction surfaces, especially in slopes since it may then be determined what minimum force is needed to move the vehicle 1.

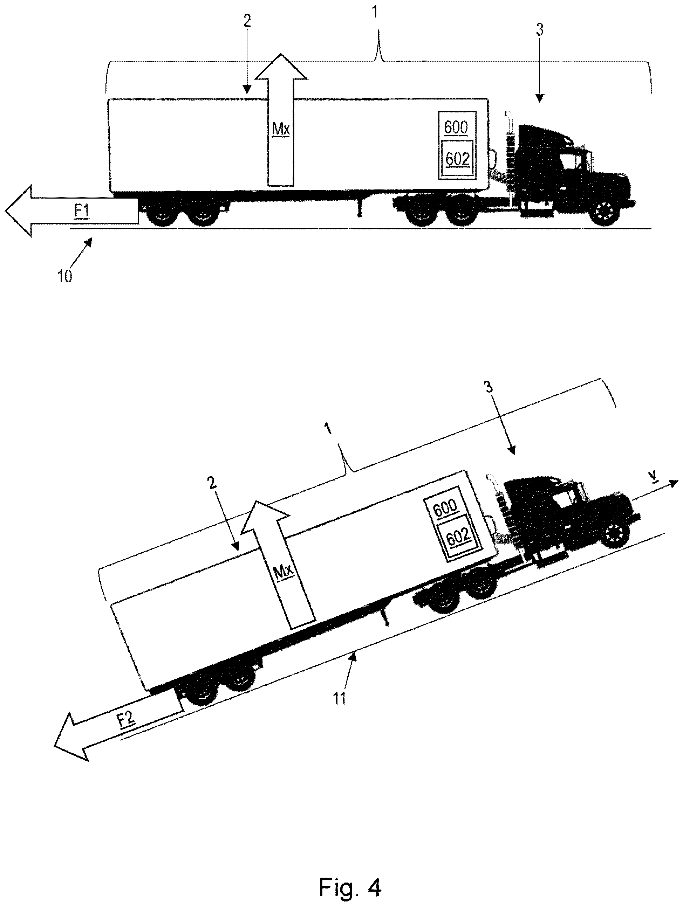

**FIG. 4** is another view of **FIGS. 1-2,** according to an example.

The computer system 600 comprising the processing circuitry 602 configured to estimate the mass Mx of the towed unit 2 of the vehicle 1 is provided. The vehicle 1 comprises the towed unit 2 and the towing unit 3. The towing unit 3 is arranged to directly or indirectly tow the towed unit 2. The estimated mass Mx of the towed unit 2 is a mass applied to the one or more axles ax of the towed unit 2.

The processing circuitry 602 is configured to estimate the mass Mx of the towed unit 2.

When the vehicle 1 is standing still on the road surface 10, the processing circuitry 602 is configured to estimate the mass Mx of the towed unit 2 based on the first propulsion force F1 needed to be applied to at least one of the wheels Wt of the towing unit 3 to move the towed unit 2 when the towed unit 2 is applying a brake force to at least one of the wheels Wx of the towed unit 2.

When the vehicle 1 is travelling up the slope 11, the processing circuitry 602 is configured to estimate the mass Mx of the towed unit 2 based on the second propulsion force F2 needed to be applied to at least one of the wheels Wt of the towing unit 3 to maintain a velocity v of the vehicle 1.

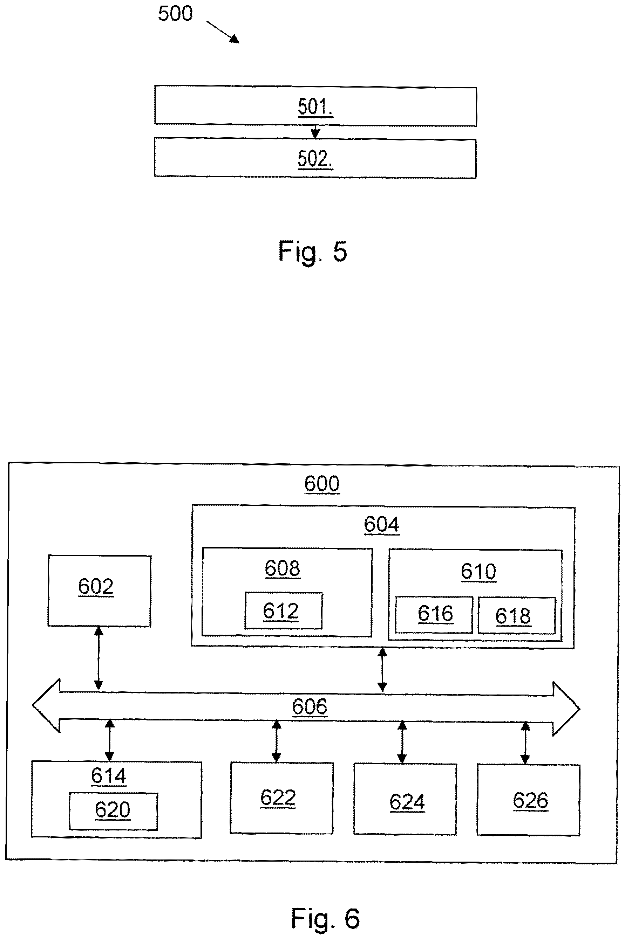

**FIG. 5** is a flow chart of an exemplary computer-implemented method 500 for estimating the mass Mx of the towed unit 2 of the vehicle 1. The vehicle 1 comprises the towed unit 2 and the towing unit 3. The towing unit 3 is arranged to directly or indirectly tow the towed unit 2. The estimated mass Mx of the towed unit 2 is a mass applied to the one or more axles ax of the towed unit 2.

The method 500 comprising estimating the mass Mx of the towed unit 2 by performing action 501 and/or action 502 below. The method 500 may be combined with any of the examples below and/or with any of the features of the attached claims.

**Action 501**

The method comprises, by processing circuitry 602 of a computer system 600, when the vehicle 1 is standing still on the road surface 10, estimating the mass Mx of the towed unit 2 based on a first propulsion force F1 needed to be applied to at least one of the wheels Wt of the towing unit 3 to move the towed unit 2 when the towed unit 2 is applying a brake force to at least one of the wheels Wx of the towed unit 2.

**Action 502**

Additionally or alternative to above action 501, the method comprises, by the processing circuitry 602, when the vehicle 1 is travelling up the slope 11, estimating the mass Mx of the towed unit 2 based on a second propulsion force F2 needed to be applied to at least one of the wheels Wt of the towing unit 3 to maintain a velocity v of the vehicle 1.

*Further variations and examples*

Examples herein may be use for when the vehicle 1 is manually operated by an operator or when the vehicle 1 is an autonomous vehicle where the mass mx of the towed unit 2 may need to be determined for any suitable use case such as discussed above with respect to Action 303.

Examples herein may comprise any of the following steps for estimating the mass Mx of the towed unit 2, e.g., as part of action 301 above.

Step 1. Control the vehicle to stand on a friction-controlled surface, e.g., the road surface 10.

Step 2. Trigger the vehicle 1 to apply full brake torque on the towed unit 2.

Step 3. Trigger the vehicle 1 to ramp up a propulsion force on the towing unit 3 until resulting longitudinal movement occurs.

Step 4. Obtain applied propulsion force needed to create a steady state movement.

Step 5. Use results to calculate initial mass estimation.

Again with reference to FIG. 1. M2 is the mass applied on the one or more front axles a2 of the towing unit 3. M1 may comprise two different masses applied to the one or more rear axles a1, one by the towed unit 2 and one by the towing unit 3. M0 is the mass applied on the one or more axles ax. $\mu$ (not shown in FIG. 1) is a known friction coefficient of the road surface 10 while the vehicle 1 is sliding or dragged over the road surface 10. g is gravity and F1 may be is the applied force on towing unit to create steady state velocity while trailer tires are fully locked.

M0 may be calculated from a steady state, e.g., when the velocity v is maintained over a set period of time such as 1 second, by using the following equation: $F1 = \mu * M0 * g$; which may be rearranged such that $M0 = F1/(\mu * g)$.

In these examples the total mass Mx of the towed unit 2 may then be estimated based on M0, e.g., as part of action 301. The estimation may further account for the mass M1 of the towed unit 2 applied to the one or more rear axles a1, which may be obtained by a sensor of the one or more sensors 20 measuring the load of the one or more rear axles a1 of the towing unit 3. The estimation may then further be based on a predefined mass of the towing unit 3 or a previous measurement of the mass of the towing unit 3, e.g., obtained as predefined from manufacturer or by measuring before coupling with the towed unit 2.

Preferably, the mass Mx of the towed unit 2 may be estimated by calculating M0 + M1 - M1pre, where M1 is as measured by the one or more sensors 20, and where M1pre is M1 as measured when the towing unit 3 and the towed unit 2 were not coupled with each other.

As an alternative, the mass Mx of the towed unit 2 may be estimated by calculating M0 + M1 + M2 as a first sum S1, e.g., where M1 and M2 are as measured by the one or more sensors 20, and by then subtracting the mass Mt from the calculated first sum S1. In these examples, the mass Mt may be predefined or previously measured when the towing unit 3 and the towed unit 2 were not coupled with each other.

As an addition, if the controlled friction of the road surface cannot be used, the same result can be achieved with road inclination and free rolling trailer tires, e.g., as in action 302.

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602

may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device

interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples 1-20 which may be combined with any of the above examples or attached claims in any suitable manner.

Example 1. A computer system 600 comprising processing circuitry 602 configured to estimate a mass Mx of a towed unit 2 of a vehicle 1, the vehicle 1 comprising the towed unit 2 and a towing unit 3 arranged to directly or indirectly tow the towed unit 2, the estimated mass Mx of the towed unit 2 being a mass applied to one or more axles ax of the towed unit 2, the processing circuitry 602 further being configured to estimate the mass Mx of the towed unit 2, wherein

- when the vehicle 1 is standing still on a road surface 10, the processing circuitry 602 is configured to estimate the mass Mx of the towed unit 2 based on a first propulsion force F1 needed to be applied to at least one of the wheels Wt of the towing unit 3 to move the towed unit 2 when the towed unit 2 is applying a brake force to at least one wheel of wheels Wx of the towed unit 2, and/or
- when the vehicle 1 is travelling up a slope 11, the processing circuitry 602 is configured to estimate the mass Mx of the towed unit 2 based on a second propulsion force F2 needed to be applied to at least one of the wheels Wt of the towing unit 3 to maintain a velocity v of the vehicle 1.

Example 2. The computer system 600 of Example 1, wherein when the vehicle 1 is standing still on the road surface 10 the processing circuitry 602 is configured to estimate the mass Mx of the towed unit 2 by being configured to:

- trigger a maximum brake force to at least one of the wheels Wx of the towed unit 2 such that the wheels Wx of the towed unit 2 is not capable of rotating over the road surface 10,
- trigger a propulsion force to be applied to at least one of the wheels Wt of the towing unit 3,
- measure the first propulsion force F1 needed to be applied to at least one of the wheels Wt of the towing unit 3 to move the towed unit 2 by sliding the towed unit 2 over the road surface 10.

Example 3. The computer system 600 of Example 2, wherein the processing circuitry 602 is configured to measure the first propulsion force F1 needed to be applied to at least one of the wheels Wt of the towing unit 3 to move the towed unit 2 by being configured to obtain sensor data of one or more sensors 20 of the vehicle 1, the sensor data being indicative of a longitudinal motion of the vehicle 1, and to measure the first propulsion force F1 in response to detecting that the sensor data is indicative of that the vehicle 1 is moving longitudinally.

Example 4. The computer system 600 of any of Examples 1-3, wherein the road surface 10 is associated with a predefined friction and wherein when the vehicle 1 is standing still on the road surface 10, the processing circuitry 602 is configured to estimate the mass Mx of the towed unit 2 based on the predefined friction.

Example 5. The computer system 600 of any of Examples 1-4, wherein when the vehicle 1 is standing still on the road surface 10, the processing circuitry 602 is configured to estimate the mass Mx of the towed unit 2 by calculating $\frac{F1}{\mu * g} - mt$ , where F1 is the first propulsion force F1 needed to be applied to at least one of the wheels Wt of the towing unit 3 to move the towing unit 3, where $\mu$ is a predefined friction of the road surface 10 the vehicle 1 is standing on, and where g is the gravitational force, and where $mt$ is a mass of the towing unit 3 and/or a mass applied to axles of the towing unit 3.

Example 6. The computer system 600 of any of Examples 1-5, wherein when the vehicle 1 is standing still on the road surface 10 and when the towed unit 2 is applying a vertical load on the towing unit 3, the processing circuitry 602 is configured to estimate the mass Mx of the towed unit 2 by accounting for the vertical load applied on the towing unit 3.

Example 7. The computer system 600 of Example 1-6, wherein when the vehicle 1 is travelling up the slope 11, the processing circuitry 602 is configured to estimate the mass Mx of the towed unit 2 by being configured to:

- Trigger a propulsion force to be applied to at least one of the wheels Wt of the towing unit 3,
- Measure the second propulsion force needed to be applied to at least one of the wheels Wt of the towing unit 3 to maintain the velocity v of the vehicle 1 over a period of time.

Example 8. The computer system 600 of any of Examples 1-7, wherein when the vehicle 1 is travelling up the slope 11, the processing circuitry 602 is configured to estimate the mass Mx of the towed unit 2 by being configured to obtain an angle of the slope 11 and to estimate the mass Mx of the towed unit 2 further based on the angle of the slope 11.

Example 9. The computer system 600 of any of Examples 8, wherein the processing circuitry 602 is configured to obtain the angle of the slope 11 by being configured to obtain sensor data of one or more sensors 20 of the vehicle 1 indicative of an angle of the slope 11, and to estimate the angle of the slope 11 based on the sensor data.

Example 10. The computer system 600 of any of Examples 8, wherein the processing circuitry 602 is configured to obtain the angle of the slope 11 by being configured to obtain a predefined angle of the slope 11.

Example 11. The computer system 600 of any of Examples 1-10, wherein when the vehicle 1 is travelling up the slope 11, the processing circuitry 602 is configured to estimate the mass Mx of the towed unit 2 by calculating $F2 * g * \sin \alpha - mt$, where F2 is the second propulsion force F2 needed to maintain the velocity of the vehicle 1 over the set period of time, $\alpha$ is an angle of the slope 11, and where g is the gravitational force, where $mt$ is a mass of the towing unit 3 and/or a mass applied to axles of the towing unit 3.

Example 12. The computer system 600 of any of Examples 1-11, wherein when the vehicle 1 is travelling up the slope 11, the processing circuitry 602 is configured to estimate the mass Mx of the towed unit 2 by accounting for any one or more out of:

- rolling resistance of the vehicle 1,
- wind conditions, e.g., air drag and/or wind resistance.

Example 13. A vehicle 1 comprising a towing unit 3 and a towed unit 2, the towing unit 3 is arranged to directly or indirectly tow the towed unit 2, the vehicle comprising and/or is controlled by, the computer system 600 of any of Examples 1-12.

Example 14. A computer-implemented method 300, 500 for estimating a mass Mx of a towed unit 2 of a vehicle 1, the vehicle 1 comprising the towed unit 2 and a towing unit 3 arranged to directly or indirectly tow the towed unit 2, the estimated mass Mx of the towed unit 2 being a mass applied to one or more axles ax of the towed unit 2, the method comprising estimating the mass Mx of the towed unit 2 by:

- by processing circuitry 602 of a computer system 600, when the vehicle 1 is standing still on a road surface 10, estimating 301, 501 the mass Mx of the towed unit 2 based on a first propulsion force F1 needed to be applied to at least one of the wheels Wt of the towing unit 3 to move the towed unit 2 when the towed unit 2 is applying a brake force to at least one wheel of wheels Wx of the towed unit 2, and/or

- by the processing circuitry 602, when the vehicle 1 is travelling up a slope 11, estimating 302, 502

the mass Mx of the towed unit 2 based on a second propulsion force F2 needed to be applied to at least one of the wheels Wt of the towing unit 3 to maintain a velocity v of the vehicle 1.

Example 15. The method of Example 14, wherein when the vehicle 1 is standing still on the road surface 10 the method comprises estimating 301 the mass Mx of the towed unit 2 by comprising:

- triggering 301a a maximum brake force to at least one of the wheels Wx of the towed unit 2 such that the wheels Wx of the towed unit 2 is not capable of rotating over the road surface 10,
- triggering 301b a propulsion force to be applied to at least one of the wheels Wt of the towing unit 3, and
- neasuring 301c the first propulsion force F1 needed to be applied to at least one of the wheels Wt of the towing unit 3 to move the towed unit 2 by sliding the towed unit 2 over the road surface 10.

Example 16. The method of Example 14 or 15, wherein when the vehicle 1 is standing still on the road surface 10 the method comprises estimating 301 the mass Mx of the towed unit 2 by calculating

$\frac{F1}{\mu * g} - mt$ ; where F1 is the first propulsion force F1 needed to be applied to at least one of the wheels Wt of the towing unit 3 to move the towing unit 3, where $\mu$ is a predefined friction of the road surface 10 the vehicle 1 is standing on, and where g is the gravitational force, and where $mt$ is a mass of the towing unit 3 and/or a mass applied to axles of the towing unit 3.

Example 17. The method of any of Examples 14-16, wherein when the vehicle 1 is travelling up the slope 11, the method comprises estimating 302 the mass Mx of the towed unit 2 by comprising:

- Triggering 302a a propulsion force to be applied to at least one of the wheels Wt of the towing unit 3,
- Measuring 302b the second propulsion force F2 needed to be applied to at least one of the wheels Wt of the towing unit 3 to maintain the velocity of the vehicle 1 over a period of time.

Example 18. The method of any of Examples 14-17, wherein when the vehicle 1 is travelling up the slope 11, the method comprises estimating 302 the mass Mx of the towed unit 2 by calculating 302c: F2 * g * sin($\alpha$) - $mt$; where F2 is the second propulsion force F2 needed to maintain the velocity of the vehicle 1 over the set period of time, $\alpha$ is an angle of the slope 11, and where g is the gravitational force, where $mt$ is a mass of the towing unit 3 and/or a mass applied to axles of the towing unit 3.

Example 19. A computer program product comprising program code for performing, when executed by the processing circuitry 602, the method of any of Examples 14-18.

Example 20. A non-transitory computer-readable storage medium comprising instructions, which when executed by the processing circuitry 602, cause the processing circuitry 602 to perform the method of any of Examples 14-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. § It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (600) comprising processing circuitry (602) configured to estimate a mass (Mx) of a towed unit (2) of a vehicle (1), the vehicle (1) comprising the towed unit (2) and a towing unit (3) arranged to directly or indirectly tow the towed unit (2), the processing circuitry (602) further being configured to estimate the mass (Mx) of the towed unit (2), wherein

   - when the vehicle (1) is standing still on a road surface (10), the processing circuitry (602) is configured to estimate the mass (Mx) of the towed unit (2) based on a first propulsion force (F1) needed to be applied to at least one of the wheels (Wt) of the towing unit (3) to move the towed unit (2) when the towed unit (2) is applying a brake force to at least one wheel of wheels (Wx) of the towed unit (2), and/or
   - when the vehicle (1) is travelling up a slope (11), the processing circuitry (602) is configured to estimate the mass (Mx) of the towed unit (2) based on a second propulsion force (F2) needed to be applied to at least one of the wheels (Wt) of the towing unit (3) to maintain a velocity (v) of the vehicle (1).

2. The computer system (600) of claim 1, wherein when the vehicle (1) is standing still on the road surface (10) the processing circuitry (602) is configured to estimate the mass (Mx) of the towed unit (2) by being configured to:

   - trigger a maximum brake force to at least one of the wheels (Wx) of the towed unit (2) such that the wheels (Wx) of the towed unit (2) is not capable of rotating over the road surface (10),
   - trigger a propulsion force to be applied to at least one of the wheels (Wt) of the towing unit (3),
   - measure the first propulsion force (F1) needed to be applied to at least one of the wheels (Wt) of the towing unit (3) to move the towed unit (2) by sliding the towed unit (2) over the road surface (10).

3. The computer system (600) of claim 2, wherein the processing circuitry (602) is configured to measure the first propulsion force (F1) needed to be applied to at least one of the wheels (Wt) of the towing unit (3) to move the towed unit (2) by being configured to obtain sensor data of one or more sensors (20) of the vehicle (1), the sensor data being indicative of a longitudinal motion of the vehicle (1), and to measure the first propulsion force (F1) in response to detecting that the sensor data is indicative of that the vehicle (1) is moving longitudinally.

4. The computer system (600) of any of claims 1-3, wherein when the vehicle (1) is standing still on the road surface (10), the processing circuitry (602) is configured to estimate the mass (Mx) of the towed unit (2) by calculating $\frac{F1}{\mu * g} - mt$, where F1 is the first propulsion force (F1) needed to be applied to at least one of the wheels (Wt) of the towing unit (3) to move the towing unit (3), where $\mu$ is a predefined friction of the road surface (10) the vehicle (1) is standing on, and where g is the gravitational force, and where *mt* is a mass of the towing unit (3) and/or a mass applied to axles (a1, a2) of the towing unit (3).

5. The computer system (600) of any of claims 1-4, wherein when the vehicle (1) is standing still on the road surface (10) and when the towed unit (2) is applying a vertical load on the towing unit (3), the processing circuitry (602) is configured to estimate the mass (Mx) of the towed unit (2) by accounting for the vertical load applied on the towing unit (3).

6. The computer system (600) of claim 1-5, wherein when the vehicle (1) is travelling up the slope (11), the processing circuitry (602) is configured to estimate the mass (Mx) of the towed unit (2) by being configured to:

   - trigger a propulsion force to be applied to at least one of the wheels (Wt) of the towing unit (3),
   - measure the second propulsion force needed to be applied to at least one of the wheels (Wt) of the towing unit (3) to maintain the velocity (v) of the vehicle (1) over a period of time.

7. The computer system (600) of any of claims 1-6, wherein when the vehicle (1) is travelling up the slope (11), the processing circuitry (602) is configured to estimate the mass (Mx) of the towed unit (2) by calculating $F2 * g * \sin(\alpha) - mt$, where F2 is the second propulsion force (F2) needed to maintain the velocity of the vehicle (1) over the set period of time, $\alpha$ is an angle of the slope (11), where g is the gravitational force, and where *mt* is a mass of the towing unit (3) and/or a mass applied to axles of the towing unit (3).

8. A vehicle (1) comprising a towing unit (3) and a towed unit (2), the towing unit (3) is arranged to directly or indirectly tow the towed unit (2), the vehicle (1) comprising, and/or is controlled by, the computer system (600) of any of claims 1-12.

9. A computer-implemented method (300, 500) for estimating a mass (Mx) of a towed unit (2) of a vehicle (1), the vehicle (1) comprising the towed unit (2) and a towing unit (3) arranged to directly or indirectly tow the towed unit (2), the method comprising estimating the mass (Mx) of the towed unit (2) by:

- by processing circuitry (602) of a computer system (600), when the vehicle (1) is standing still on a road surface (10), estimating (301, 501) the mass (Mx) of the towed unit (2) based on a first propulsion force (F1) needed to be applied to at least one of the wheels (Wt) of the towing unit (3) to move the towed unit (2) when the towed unit (2) is applying a brake force to wheels (Wx) of the towed unit (2), and/or
- by the processing circuitry (602), when the vehicle (1) is travelling up a slope (11), estimating (302, 502) the mass (Mx) of the towed unit (2) based on a second propulsion force (F2) needed to be applied to at least one of the wheels (Wt) of the towing unit (3) to maintain a velocity (v) of the vehicle (1).

10. The method of claim 9, wherein when the vehicle (1) is standing still on the road surface (10) the method comprises estimating (301) the mass (Mx) of the towed unit (2) by comprising:

- triggering (301a) a maximum brake force to at least one of the wheels (Wx) of the towed unit (2) such that the wheels (Wx) of the towed unit (2) is not capable of rotating over the road surface (10),
- triggering (301b) a propulsion force to be applied to at least one of the wheels (Wt) of the towing unit (3), and
- measuring (301c) the first propulsion force (F1) needed to be applied to at least one of the wheels (Wt) of the towing unit (3) to move the towed unit (2) by sliding the towed unit (2) over the road surface (10).

11. The method of claim 9 or 10, wherein when the vehicle (1) is standing still on the road surface (10) the method comprises estimating (301) the mass (Mx) of the towed unit (2) by calculating (301d):

$$\frac{F1}{\mu * g} - mt ;$$

where F1 is the first propulsion force (F1) needed to be applied to at least one of the wheels (Wt) of the towing unit (3) to move the towing unit (3), where μ is a predefined friction of the road surface (10) the vehicle (1) is standing on, and g is the gravitational force, and where *mt* is a mass of the towing unit (3) and/or a mass applied to axles of the towing unit (3).

12. The method of any of claims 9-11, wherein when the vehicle (1) is travelling up the slope (11), the method comprises estimating (302) the mass (Mx) of the towed unit (2) by comprising:

- triggering (302a) a propulsion force to be applied to at least one of the wheels (Wt) of the towing unit (3),
- measuring (302b) the second propulsion force (F2) needed to be applied to at least one of the wheels (Wt) of the towing unit (3) to maintain the velocity (v) of the vehicle (1) over a period of time.

13. The method of any of claims 9-12, wherein when the vehicle (1) is travelling up the slope (11), the method comprises estimating (302) the mass (Mx) of the towed unit (2) by calculating (302c): F2 * g * sin(α) - *mt*;

where F2 is the second propulsion force (F2) needed to maintain the velocity (v) of the vehicle (1) over the set period of time, α is an angle of the slope (11), and where g is the gravitational force, where *mt* is a mass of the towing unit (3) and/or a mass applied to axles of the towing unit (3).

14. A computer program product comprising program code for performing, when executed by the processing circuitry, the method of any of claims 9-13.

15. A non-transitory computer-readable storage medium comprising instructions, which when executed by the processing circuitry, cause the processing circuitry to perform the method of any of claims 9-13.

Fig. 1

Fig. 2

Fig. 3

Fig. 4

500

| 501. |
|------|

| 502. |
|------|

## Fig. 5

600

604

608

612

610

616 618

602

606

614

620

622

624

626

## Fig. 6

Europäisches
Patentamt

European
Patent Office

Office européen
des brevets

# EUROPEAN SEARCH REPORT

**Application Number**

EP 24 19 4847

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 118 270 012 A (GREAT WALL MOTOR CO LTD) 2 July 2024 (2024-07-02)<br>* paragraph [0004] - paragraph [0027] *<br>* paragraph [0051] - paragraph [0064] *<br>* paragraph [0092] - paragraph [0100] *<br>* paragraph [0103] - paragraph [0108] *<br>* paragraph [0120] - paragraph [0121] *<br>* figures 1-10 * | 1,4-9,<br>11-15<br>2,3,10 | INV.<br>G01G19/08 |
| X<br>A | US 2004/181317 A1 (FLECHTNER HORST [DE] ET AL) 16 September 2004 (2004-09-16)<br>* paragraph [0006] - paragraph [0011] *<br>* paragraph [0013] - paragraph [0029] *<br>* paragraph [0032] - paragraph [0034] *<br>* paragraph [0038] - paragraph [0050] *<br>* paragraph [0052] *<br>* paragraph [0054] * | 1,4-9,<br>11-15<br>2,3,10 | |

**TECHNICAL FIELDS SEARCHED (IPC)**

G01G

The present search report has been drawn up for all claims

| Place of search | Date of completion of the search | Examiner |
|---|---|---|
| The Hague | 12 December 2024 | Koch, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 696 995 A1**

## ANNEX TO THE EUROPEAN SEARCH REPORT
## ON EUROPEAN PATENT APPLICATION NO.

EP 24 19 4847

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2024

| Patent document cited in search report | | Publication date | Patent family member(s) | | Publication date |
|---|---|---|---|---|---|
| CN 118270012 | A | 02-07-2024 | NONE | | |
| US 2004181317 | A1 | 16-09-2004 | DE | 10148091 A1 | 17-04-2003 |
| | | | EP | 1430276 A1 | 23-06-2004 |
| | | | JP | 4048176 B2 | 13-02-2008 |
| | | | JP | 2005504311 A | 10-02-2005 |
| | | | US | 2004181317 A1 | 16-09-2004 |
| | | | WO | 03029764 A1 | 10-04-2003 |

EPO FORM P0459

For more details about this annex : see Official Journal of the European Patent Office, No. 12/82

21